# EUROPÄISCHE PATENTSCHRIFT

(11) **EP 0 707 618 B1**
(45) Veröffentlichungstag und Bekanntmachung des Hinweises auf die Patenterteilung: **21.08.2002**
(21) Anmeldenummer: 94919637.2
(22) Anmeldetag: 16.06.1994
(51) Int. Cl.: C09D 163/00, C08K 9/04, C09D 5/03

(54) **VERFAHREN ZUR AUSSENBESCHICHTUNG VON METALLROHREN SOWIE VERWENDUNG DES PULVERLACKS ZUR EINSCHICHTIGEN AUSSENBESCHICHTUNG VON METALLROHREN**
METHOD OF COATING METAL PIPES WITH THE POWDER, AND USE OF THE COATING POWDER FOR THE SINGLE-COAT COATING OF THE OUTSIDE SURFACES OF METAL PIPES
PROCEDE DE DEPOT D'UN REVETEMENT EXTERIEUR SUR DES TUBES METALLIQUES ET UTILISATION DE LADITE LAQUE EN POUDRE POUR LE DEPOT D'UNE COUCHE UNIQUE DE REVETEMENT EXTERIEUR SUR DES TUBES METALLIQUES

(30) Priorität: 06.07.1993 DE 4322437
(43) Veröffentlichungstag der Anmeldung: 24.04.1996
(73) Patentinhaber: BASF Coatings Aktiengesellschaft, 48165 Münster (DE)
(72) Erfinder: BLÖMER, Werner, D-48607 Ochtrup (DE); REITER, Udo, D-48291 Telgte (DE); RADEMACHER, Josef, D-48165 Münster (DE)
(74) Vertreter: Fitzner, Uwe, Dr.
(86) Internationale Anmeldenummer: EP9401972
(87) Internationale Veröffentlichungsnummer: WO95002018

(56) Entgegenhaltungen:
- EP-A- 0 136 257
- EP-A- 0 217 236
- EP-A- 0 238 687
- DE-A- 1 569 961
- DE-B- 1 158 254
- FR-A- 2 394 590
- US-A- 5 049 596

## Beschreibung

Die vorliegende Erfindung betrifft. Verfahren zur Außenbeschichtung von Metallrohren mit Pulverlacken enthaltend Epoxidharze, phenolische Vernetzungsmittel Katalysatoren, Füllstoffe sowie gegebenenfalls Hilfsstsoffe und Additive sowie die Verwendung der Pulverlacke zur einschichtigen Außenbeschichtung von Metallrohren.

Metallrohre werden heute üblicherweise zum Schutz vor Korrosion mit reaktiven Pulverlacken beschichtet. Es ist bekannt, zu diesem Zweck Pulverlacke auf Basis von Epoxidharzen und geeigneten Vernetzungsmitteln zu verwenden. Die für dieses einlagige Beschichtungsverfahren für Metallrohre geeigneten Pulverlacke müssen hohen Anforderungen hinsichtlich Korrosionsschutz, Heißwasserbelastung und hinsichtlich der kathodischen Delamination genügen. Zur Außenrohrbeschichtung geeignete Pulverlacke sind beispielsweise bekannt aus der EP-B-104 719 und der US-PS 4,122,060. Bei den aus der EP-B-104 719 bekannten Pulverlacken handelt es sich um Epoxidharze, die beispielsweise mit phenolischen Härtern vernetzt werden. Die beschriebenen Pulverlacke enthalten weiterhin Katalysatoren sowie Calciumoxid als Füllstoff.

Die US-PS 4,122,060 beschreibt Pulverlacke auf Basis von Epoxidharzen, Härtern, Füllstoffen und Katalysatoren, wobei als Füllstoff bevorzugt amorphe Kieselsäuren eingesetzt werden. Des weiteren ist es bekannt, als Füllstoffe in Epoxid-Pulverlacken zur Rohrbeschichtung Feld- und Schwerspate oder auch gefälltes Bariumsulfat einzusetzen.

US-PS 5, 049, 596 beschreibt Pulverlache zur Beschichtung von elektrischen und elektronischen Bauteilen, die als Füllstoffe Siliziumdioxidpulver enthalten, die mit einem glycidylgruppen-enthaltenen Haltuermittler beschichtet.

Die bisher bekannten Pulverlacke auf der Basis von Epoxidharzen, geeigneten Vernetzungsmitteln, Katalysatoren und Füllstoffen, wie z.B. amorphen Kieselsäuren, Feld- und Schwerspaten und gefällten Bariumsulfaten, weisen den Nachteil auf, daß sie schlechte Eigenschaften bezüglich der Heißwasserbeständigkeit und der Beständigkeit bei der kathodischen Delamination (DIN 30671) aufweisen.

Der vorliegenden Erfindung lag demzufolge die Aufgabe zugrunde, die Nachteile des Standes der Technik zu beseitigen, d.h. Pulverlacke auf Basis von Epoxidharzen, geeigneten Vernetzungsmitteln, wie z.B. phenolischen Härtern, Füllstoffen und Katalysatoren zur Verfügung zu stellen, die zur Außenbeschichtung von Metallrohren geeignet sind. Dabei sollten die mit den Pulverlacken beschichteten Rohre einen guten Korrosionsschutz, eine verbesserte Heißwasserbeständigkeit und eine verbesserte Beständigkeit hinsichtlich der kathodischen Delamination aufweisen. Desweiteren sollten die erhaltenen Beschichtungen eine hohe Flexibilität haben.

Die der Erfindung zugrundeliegende Aufgabe wird gelöst durch Pulverlacke, enthaltend Epoxidharze, phenolische Vernetzungsmittel, Katalysatoren, Füllstoffe sowie gegebenenfalls Hilfsmittel und Additive. Die Pulverlacke sind dadurch gekennzeichnet, daß als Füllstoffe glycidylgruppenfunktionalisierte kristalline Kieselsäuremodifikationen verwendet werden.

Geeignete Epoxidharze sind alle festen Epoxidharze mit Epoxidäquivalentgewichten zwischen etwa 400 und 3.000. Dabei handelt es sich hauptsächlich um Epoxidharze auf Basis von Bisphenol A und Bisphenol F. Besonders bevorzugt werden epoxidierte Novolakharze eingesetzt. Geeignet sind auch Mischungen von Bisphenol-A bzw. Bisphenol-F-Harzen und Novolakharzen. Die Epoxidharze auf Basis von Bisphenol A und Bisphenol F weisen im allgemeinen eine Funktionalität < 2, die epoxidierten Novolakharze eine Funktionalität > 2 auf. Besonders bevorzugt werden in den erfindungsgemäßen Pulverlacken epoxidierte Novolakharze mit einer mittleren Funktionalität im Bereich von 2,4 bis 2,8 und mit einem Epoxidäquivalentgewicht im Bereich von 600 bis 850 verwendet. Bei den epoxidierten Novolakharzen sind die phenolischen Hydroxylgruppen mit Alkyl-, Aryl- oder ähnlichen Gruppen verethert. Durch Umsetzung der phenolischen Hydroxylgruppen mit Epichlorhydrin werden Epoxidgruppen in das Molekül eingebaut. Ausgehend von Novolaken bildet sich dabei der sogenannte Epoxid-Novolak. Die epoxidierten Novolake sind strukturverwandt mit Bisphenol A-Harzen. Epoxidierte Novolakharze können hergestellt werden durch Epoxidierung von Novolaken, die z.B. aus 3 bis 4 Phenolkernen, welche über Methylenbrücken miteinander verbunden sind, bestehen. Als Novolakharze können auch alkylsubstituierte Phenole, welche mit Formaldehyd umgesetzt werden, verwendet werden.

Geeignete Epoxidharze sind beispielsweise die unter folgenden Namen im Handel erhältlichen Produkte:
Epikote 154, 1001, 1002, 1055, 1004, 1007, 1009, 2014, 3003-4F-10 der Firma Shell-Chemie, XZ 86795 und
DER 664, 667, 669, 662, 642U und 672U der Firma Dow sowie Araldit XB 4393, XB 4412, GT 7072, GT 7203, GT 7004, GT 7304, GT 7097, GT 7220 und GT 7255 der Firma Ciba Geigy.

Zur Aushärtung der Epoxidharze enthält der erfindungsgemäße Pulverlack phenolische Vernetzungsmittel. Dabei kann beispielsweise jedes beliebige Phenolharz verwendet werden, solange es die für die Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft. Besonders bevorzugt werden gemäß der vorliegenden Erfindung als phenolische Vernetzungsmittel hydroxylgruppenhaltige Bisphenol-A- oder Bisphenol-F-Harze mit einem Hydroxyäquivalentgewicht im Bereich von 180 bis 600, besonders bevorzugt im Bereich von 180 bis 300, eingesetzt. Derartige phenolische Vernetzungsmittel werden hergestellt durch Umsetzung von Bisphenol-A oder Bisphenol-F mit glycidylgruppenhaltigen Komponenten, wie z.B. dem Diglycidylether von Bisphenol-A. Derartige phenolische Vernetzungsmittel sind beispielsweise erhältlich unter der Handelsbezeichnung DEH 81, DEH 82 und DEH 87 der Firma Dow, DX 171 der Firma Shell-Chemie und XB 3082 der Firma Ciba Geigy.

Die Epoxidharze und die phenolischen Vernetzungsmittel werden dabei in einem derartigen Verhältnis eingesetzt, daß die Zahl der Epoxidgruppen zur Zahl der phenolischen OH-Gruppen in etwa 1 : 1 beträgt.

Die erfindungsgemäßen Pulverlacke enthalten einen oder mehrere geeignete Katalysatoren für die Epoxidharz-Aushärtung. Geeignete Katalysatoren sind Phosphoniumsalze organischer oder anorganischer Säuren, Imidazol und Imidazolderivate, quartäre Ammoniumverbindungen sowie Amine. Die Katalysatoren werden im allgemeinen in Anteilen von 0,001 Gew.-% bis etwa 10 Gew.-%, bezogen auf das Gesamtgewicht des Epoxidharzes und des phenolischen Vernetzungsmittels, eingesetzt.

Beispiele für geeignete Phosphoniumsalz-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium-Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Zum Teil enthalten handelsübliche phenolische Vernetzungsmittel bereits Katalysatoren für die Epoxidharz-Vernetzung.

Die erfindungsgemäßen Verfahren eingesetzte Pulverlacke sind dadurch gekennzeichnet, daß sie als Füllstoff glycidylgruppenfunktionalisierte kristalline Kieselsäuremodifikationen enthalten. Diese Füllstoffe werden üblicherweise in einem Anteil von 10 bis 50 Gew.-%, bezogen auf das Gesamtgewicht des Pulverlackes, eingesetzt. In einigen Fällen sind auch Füllstoffanteile von mehr als 50 Gew.-% möglich.

Zu den kristallinen Kieselsäure-Modifikationen zählen Quarz, Cristobalit, Tridymit, Keatit, Stishovit, Melanophlogit, Coesit und faserige Kieselsäure. Die kristallinen Kieselsäure-Modifikationen sind glycidylgruppenfunktionalisiert, wobei die Glycidylgruppenfunktionalisierung durch eine Oberflächenbehandlung erzielt wird. Es handelt sich dabei beispielsweise um Kieselsäure-Modifikationen auf der Basis von Quarz, Cristobalit und Quarzgut, die hergestellt werden durch Behandlung der kristallinen Kieselsäure-Modifikationen mit Epoxisilanen. Die glycidylgruppenfunktionalisierten Kieselsäure-Modifikationen sind auf dem Markt beispielsweise erhältlich unter der Bezeichnung Silbon® 600 EST und Silbond® 6000 EST (Hersteller: Quarzwerke GmbH).

Vorteilhafterweise enthalten die erfindungsgemäßen Pulverlacke 10 bis 40 Gew.-%, bezogen auf das Gesamtgewicht des Pulverlackes, an glycidylgruppenfunktionalisierten kristallinen Kieselsäuremodifikationen.

Die Pulverlacke können noch weitere anorganische Füllstoffe, beispielsweise Titandioxid, Bariumsulfat und Füllstoffe auf Silikatbasis, wie z.B. Talkum, Kaolin, Magnesium-, Aluminiumsilikate, Glimmer und ähnliche enthalten. Außerdem können die Pulverlacke ggf. noch Hilfsmittel und Additive enthalten. Beispiele hierfür sind Verlaufsmittel, Rieselhilfen und Entlüftungsmittel, wie beispielsweise Benzoin.

Die Herstellung der Pulverlacke erfolgt nach bekannten Methoden (vgl. z.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben auf die gewünschte Korngrößenverteilung eingestellt.

Die Pulverlacke werden elektrostatisch oder triboelektrostatisch auf die zuvor erhitzte Metallrohroberfläche aufgebracht.

Die Erfindung betrifft ein Verfahren zur Außenbeschichtung von Metallrohren mit den zuvor beschriebenen Pulverlacken. Bei diesem Verfahren wird die Metallrohroberfläche zunächst üblicherweise von Rost, Fett, Öl, Staub usw. gereinigt. Gegebenenfalls wird eine chemische Vorbehandlung (Chromatierung und/oder Phosphatierung) durchgeführt. Anschließend werden die gereinigten Metallrohre durch induktive Beheizung oder im Gasofen auf eine Beschichtungstemperatur von etwa 170 bis 250°C erwärmt. Die erfindungsgemäßen Pulverlacke werden elektrostatisch oder mittels Reibungsaufladung auf die heiße Metallrohroberfläche appliziert. Übliche Auftragsstärken des Pulverlacks liegen im Bereich von 100 bis 1000 µm, vorzugsweise im Bereich von 300 bis 500 µm.

Die Aushärtung der Pulverlacke erfolgt innerhalb weniger Minuten.

Die vorliegende Erfindung betrifft des weiteren die Verwendung der zuvor beschriebenen Pulverlacke zur Außenbeschichtung von Metallrohren.

Die nach dem erfindungsgemäßen Verfahren erhältlichen beschichteten Metallrohre weisen hervorragende Eigenschaften auf. So tritt keinerlei Ablösung des Pulverlacks vom Untergrund auf. Die Heißwasserbeständigkeit der erzielten Pulverlackbeschichtungen ist ausgezeichnet, und die Ergebnisse des CD-Tests, der die Beständigkeit der Pulverlackierung gegenüber der kathodischen Delamination gemäß DIN 30671 prüft, sind hervorragend.

Nachfolgend wird die Erfindung anhand von Beispielen näher erläutert. Teile bedeuten dabei Gewichtsteile, sofern nichts anderes angegeben wird.

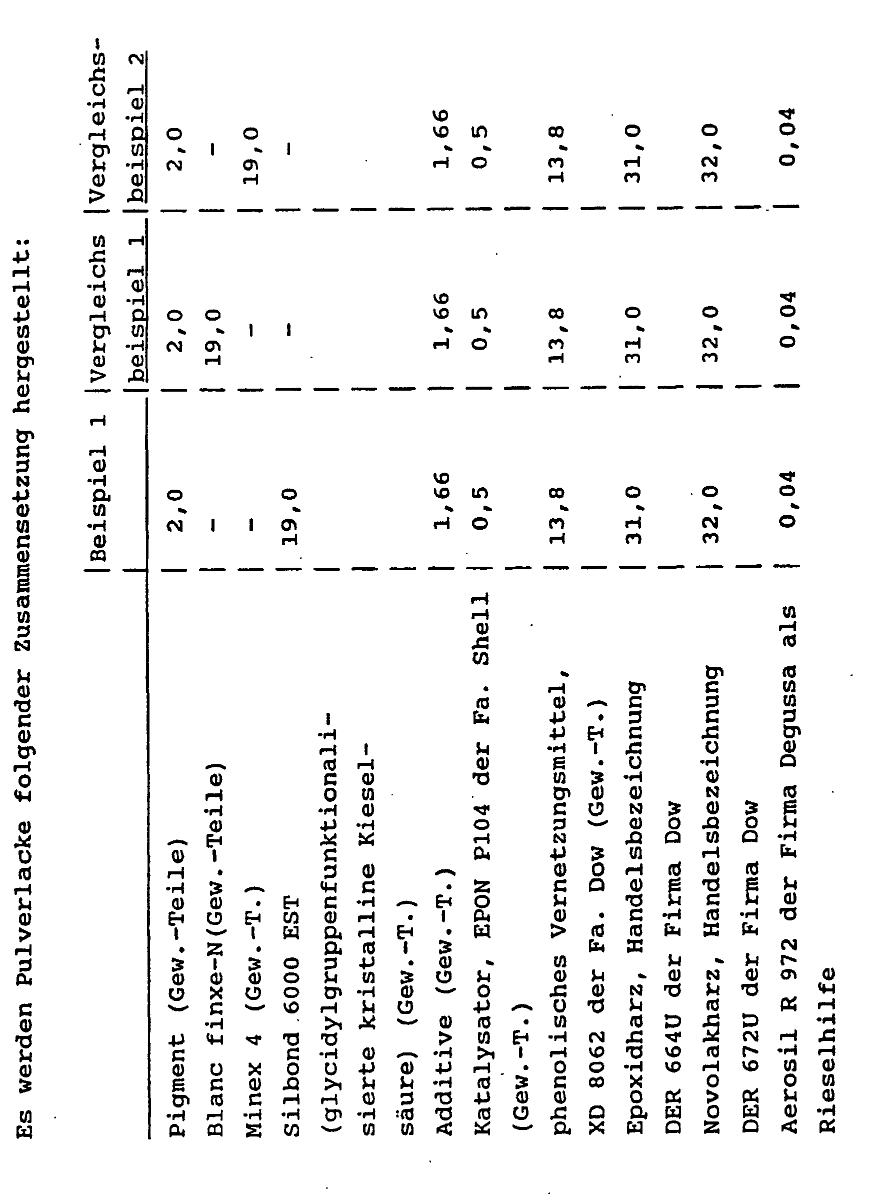

Die Pulverlacke des Beispiels 1 und der Vergleichsbeispiele 1 und 2 werden zu Pulverlacken handelsüblicher Korngrößenverteilung verarbeitet.

Die hergestellten Pulverlacke werden im Einlagenverfahren zur Außenbeschichtung von Metallrohren eingesetzt. Dazu werden Rohre vom Durchmesser 300 mm mit einer Wandstärke von 12 mm in einer Strahlanlage auf Sauberkeit SA 3 gestrahlt. Die Rauhtiefe sollte ca. 50 µm betragen. Die Rohre werden dann mit einer Induktionsspule auf 230 ± 5°C erhitzt. Die Pulverlacke des Beispiels 1 und der Vergleichsbeispiele 1 und 2 werden elektrostatisch mit einer Schichtstärke von etwa 100 µm appliziert und ausgehärtet.

Nachfolgend sind die Prüfergebnisse zusammengestellt.

| | Beispiel 1 | Vergleichs beispiel 1 | Vergleichs-beispiel 2 |
|---|---|---|---|
| Gelzeit¹⁾ 180°C | 59 sec. | 56 sec. | 58 sec. |
| Tiefung und ²⁾ Biegung (Tischkante) auf 0,5 mm Stahl-blech, 10' 180°C | 8,0 + | 7,9 + | 8,3 + |
| Schichtdicke (µm) | 60- 70 | 80 - 90 | 80 - 90 |
| Glanz 60^{°} | 87 E | 90 E | 75 E |
| Verlauf 10'180°C | mäßig | mäßig | mäßig |
| Biegung³⁾ | | | |
| RT | 32 mm | 12 mm | 15 mm |
| | 32 mm | 10 mm | 13 mm |
| ca. 0° | 18 mm | 6 mm | 11 mm |
| | 18 mm | 7 mm | 10 mm |

| | | | |
|---|---|---|---|
| ¹⁾: bestimmt mit Gelzeitgerät Coesfeld | | | |
| ²⁾: 0 = gerissen; * = Haarrisse; + = i.O. | | | |
| ³⁾: auf 5 mm Tafel gestrahlt mit Wheelabrator GH 40, SA 2,5 240°C vorgetempert, beschichtet, 120 sec. bei 240°C nachgebrannt und sofort in Wasser abgekühlt: Schichtdicke 400 - 500 µm. Je höher die Biegewerte sind, desto höher ist die Flexibilität. | | | |

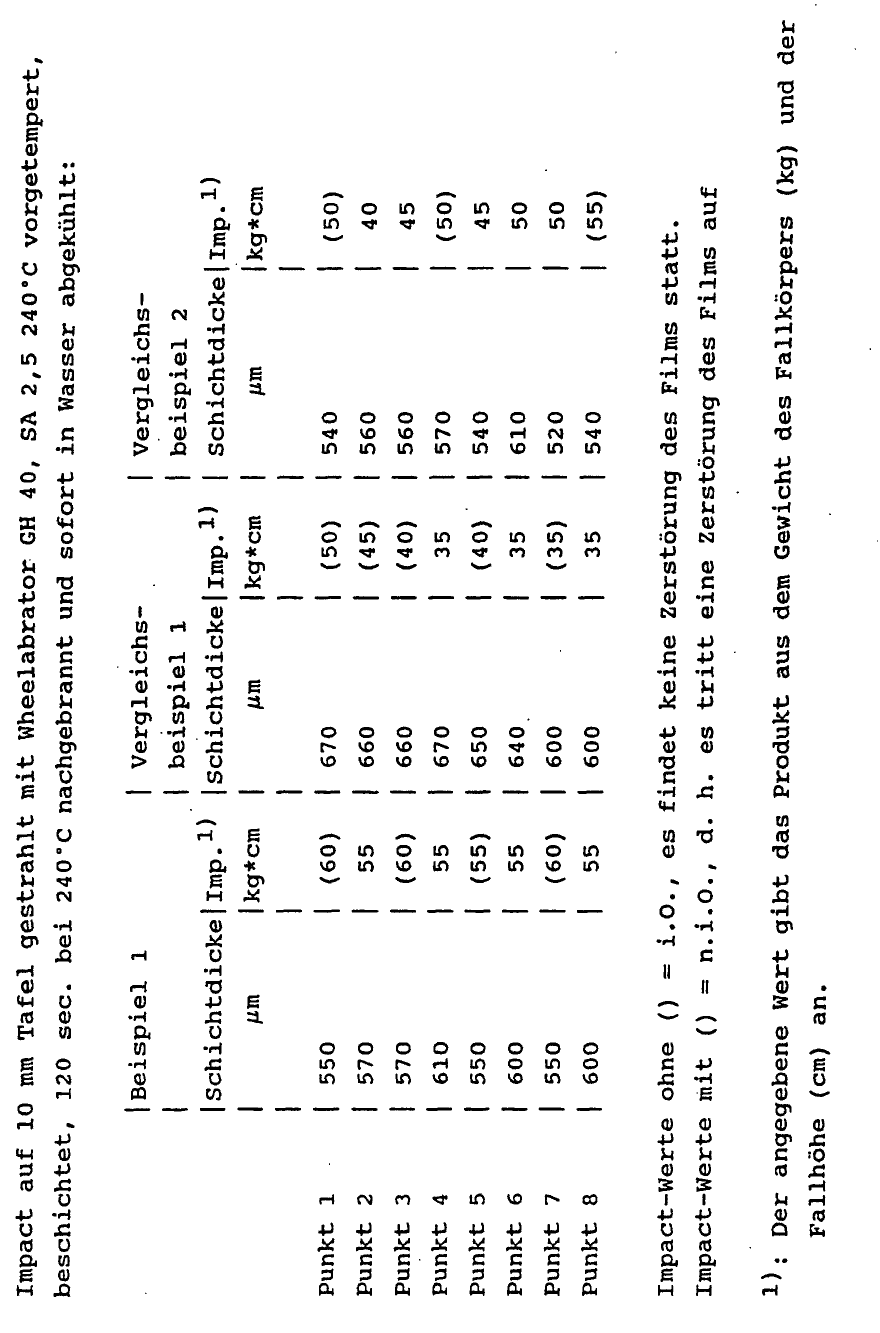

Wasserlagerung bei 80°C in Leitungswasser auf 5 mm Tafel gestrahlt mit Wheelabrator GH 40, SA 2,5, in Basomat PT in 10 vol%ig getaucht, 240°C vorgetempert, beschichtet, 120 sec. bei 240°C nachgebrannt und sofort in Wasser abgekühlt. Schichtdicke; 400-500 µm

| | Beispiel 1 | | Vergleichs-beispiel 1 | | Vergleichs-beispiel 2 | |
|---|---|---|---|---|---|---|
| | Heiß | Kalt | Heiß | Kalt | Heiß | Kalt |
| unbelastet | | + | | * | | * |
| 168 Stunden | + | + | - | * | - | -- |
| 336 Stunden | + | + | - | * | - | - |
| 504 Stunden | + | + | - | * | - | - |
| 672 Stunden | + | + | - | - | - | - |
| 840 Stunden | +/* | + | */- | */- | - | -- |
| 1008 Stunden | +/* | +/* | - | - | - | -- |
| ++ = sehr gut, + = gut, * = mäßig,- = schlecht, | | | | | | |
| --= sehr schlecht | | | | | | |

CD-Test auf 10 mm Tafeln gestrahlt mit Wheelabrator GH 40, SA 2,5, in Basomat PT 10vol%ige getaucht, 240°C vorgetempert, beschichtet, 120 sec. bei 240°C nachgebrannt und sofort in Wasser abgekühlt. Schichtdicke: 400 - 500 µm

| Unterwanderung nach | Beispiel 1 | Vergleichs-beispiel 1 | Vergleichs-beispiel 2 |
|---|---|---|---|
| 30 Tage RT | 0 - 1 mm | x | x |
| 2 Tage 65°C \| | 0 mm | x | x |
| 14 Tage 65°C \| | 1 mm | x | x |
| x = schlechte Haftung, daher keine Unterwanderung feststellbar. | | | |

Wasserlagerung freier Film bei 80°C in Leitungswasser: Schichtdicke: 400 - 500 µm

| Wasserauf-nahme nach | Beispiel 1 | Vergleichs-beispiel 1 | Vergleichs-Beispiel 2 |
|---|---|---|---|
| 240 Stunden | 5,20 % | 8,14 % | 6,01 % |
| 504 Stunden | 5,86 % | 9,89 % | 8,82 % |
| 744 Stunden | 6,21 % | 11,06 % | 9,28 % |
| 1008 Stunden | 7,05 % | 12,22 % | 10,58 % |

## Patentansprüche

1. Verfahren zur einschichtigen Außenbeschichtung von Metallrohren mit Pulverlack, enthaltend Epoxidharze, phenolische Vernetzungsmittel, Katalysatoren und Füllstoffe,
**dadurch gekennzeichnet,**
**daß** der Pulverlack als Füllstoffe glycidylgruppen-funktionalisierte kristalline Kieselsäuremodifikationen enthält.

2. Verfahren nach Anspruch 1, **dadurch gekennzeichnet,**
**daß** als Epoxidharz epoxidierte Novolakharze mit einer mittleren Funktionalität im Bereich von 2,4 bis 2,8 und mit einem Epoxidäquivalentgewicht im Bereich von 600 bis 850 verwendet werden.

3. Verfahren nach Anspruch 1 oder 2, **dadurch gekennzeichnet,**
**daß** als phenolische Vernetzungsmittel hydroxylgruppenhaltige Bisphenol-A- oder Bisphenol-F-Harze mit einem Hydroxyäquivalentgewicht im Bereich von 180 bis 600 verwendet werden.

4. Verfahren nach Anspruch 1 bis 3, **dadurch gekennzeichnet,**
**daß** der Pulverlack 10 bis 40 Gew.-%, bezogen auf das Gesamtgewicht des Pulverlackes, glycidylgruppen-funktionalisierte kristalline Kieselsäuremodifikationen enthält.

5. Metallrohr, beschichtet mit Pulverlack gemäß Verfahren nach einem der Ansprüche 1 bis 4.

6. Verwendung eines Pulverlacks zur einschichtigen Beschichtung von Metallrohren, der Epoxidharze, phenolische Vemetzungsmittel, Katalysatoren und als Füllstoffe glycidylgruppen-funktionalisierte kristalline Kieselsäuremodifikationen enthält.

7. Verwendung nach Anspruch 6, **dadurch gekennzeichnet,**
**daß** als Epoxidharz epoxidierte Novolakharze mit einer mittleren Funktionalität im Bereich von 2,4 bis 2,8 und mit einem Epoxidäquivalentgewicht im Bereich von 600 bis 850 eingesetzt werden.

8. Verwendung nach Anspruch 6 oder 7, **dadurch gekennzeichnet,**
**daß** als phenolische Vemetzungsmittel hydroxylgruppenhaltige Bisphenol-A- oder Bisphenql-F-Harze mit einem Hydroxyäquiyalentgewicht im Bereich von 180 bis 600 eingesetzt werden.

9. Verwendung nach Anspruch 6 bis 8, **dadurch gekennzeichnet,**
**daß** der Pulverlack 10 bis 40 Gew.-%, bezogen auf das Gesamtgewicht des Pulverlackes, glycidylgruppen-funktionalisierte kristalline Kieselsäuremodifikationen enthält.

## Claims

1. Processes for the single-layer exterior coating of metal pipes using a powder coating comprising epoxy resins, phenolic crosslinking agents, catalysts and fillers, **characterized in that** the powder coating contains as fillers crystalline silicic acid modifications which are functionalized with glycidyl groups.

2. Processes according to claim 1, **characterized in that** epoxidized novolak resins having an average functionality in the range from 2.4 to 2.8 and with an epoxide equivalent weight in the range from 600 to 850 are used as epoxy resin.

3. Processes according to claim 1 or 2, **characterized in that** the phenolic crosslinking agents used are hydroxyl group-containing bisphenol A or bisphenol F resins having a hydroxyl equivalent weight in the range from 180 to 600.

4. Processes according to claim 1 to 3, **characterized in that** the powder coating contains from 10 to 40% by weight, based on the total weight of the powder coating, of crystalline silicic acid modifications functionalized with glycidyl groups.

5. Metal pipe coated with powder coating using processes according to one of claims 1 to 4.

6. Use of a powder coating the single-layer exterior coating of metal pipes, comprising epoxy resins, phenolic crosslinking agents, catalysts and as fillers crystalline silicic acid modifications which are functionalized with glycidyl groups.

7. Use according to claim 6, **characterized in that** epoxidized novolak resins having an average functionality in the range from 2.4 to 2.8 and with an epoxide equivalent weight in the range from 600 to 850 are used as epoxy resin.

8. Use according to claim 6 or 7, **characterized in that** the phenolic crosslinking agents used are hydroxyl group-containing bisphenol A or bisphenol F resins having a hydroxyl equivalent weight in the range from 180 to 600.

9. Use according to claim 6 to 8, **characterized in that** the powder coating contains from 10 to 40% by weight, based on the total weight of the powder coating, of crystalline silicic acid modifications functionalized with glycidyl groups.

## Revendications

1. Procédé pour le revêtement externe monocouche de tubes métalliques avec une peinture en poudre contenant des résines époxy, des agents de réticulation phénoliques, des catalyseurs et des charges, **caractérisé en ce que** la peinture en poudre contient en tant que charges des formes de silices cristallines fonctionnalisées avec des groupes glycidyle.

2. Procédé selon la revendication 1, **caractérisé en ce qu'**on utilise comme résine époxy des résines Novolaques époxydées ayant une fonctionnalité moyenne dans la plage allant de 2,4 à 2,8 et ayant un poids d'équivalent époxy dans la plage allant de 600 à 850.

3. Procédé selon la revendication 1 ou 2, **caractérisé en ce qu'**on utilise comme agents de réticulation phénoliques des résines à base de bisphénol A ou de bisphénol F contenant des groupes hydroxy et ayant un poids d'équivalent de groupes hydroxy dans la plage allant de 180 à 600.

4. Procédé selon l'une quelconque des revendications 1 à 3, **caractérisé en ce que** la peinture en poudre contient de 10 à 40 % en poids, par rapport au poids total de la peinture en poudre, de formes de silices cristallines fonctionnalisées avec des groupes glycidyle.

5. Tube métallique revêtu avec une peinture en poudre selon le procédé conforme à l'une quelconque des revendications 1 à 4.

6. Utilisation d'une peinture en poudre pour le revêtement monocouche de tubes métalliques, qui contient des résines époxy, des agents de réticulation phénoliques, des catalyseurs et, en tant que charges, des formes de silices cristallines fonctionnalisées avec des groupes glycidyle.

7. Utilisation selon la revendication 6, **caractérisée en ce qu'**on utilise comme résine époxy des résines Novolaques époxydées ayant une fonctionnalité moyenne dans la plage allant de 2,4 à 2,8 et ayant un poids d'équivalent époxy dans la plage allant de 600 à 850.

8. Utilisation selon la revendication 6 ou 7, **caractérisée en ce qu'**on utilise comme agents de réticulation phénoliques des résines à base de bisphénol A ou de bisphénol F contenant des groupes hydroxy et ayant un poids d'équivalent de groupes hydroxy dans la plage allant de 180 à 600.

9. Utilisation selon l'une quelconque des revendications 6 à 8, **caractérisé en ce que** la peinture en poudre contient de 10 à 40 % en poids, par rapport au poids total de la peinture en poudre, de formes de silices cristallines fonctionnalisées avec des groupes glycidyle.
